# EUROPEAN PATENT APPLICATION

(11) **EP 1 215 900 A2**
(43) Date of publication of application: **19.06.2002**
(21) Application number: 01130005.0
(22) Date of filing: 17.12.2001
(51) Int. Cl.: H04N 7/01

(54) **Telecine display device and telecine display method**

(30) Priority: 18.12.2000 JP 2000384357
(71) Applicant: NEC CORPORATION, Tokyo (JP)
(72) Inventor: Shimizu, Yoshiharu, Minato-ku, Tokyo (JP)
(74) Representative: Baronetzky, Klaus, Dipl.-Ing.

(57) **Abstract**

The telecine display method calculates a first timing signal based on the refresh rate of a video signal having a telecine conversion applied from an original picture image of a film source, and a second timing signal based on the refresh rate of the original picture image of the film source. And, the method applies the 2-3 pull-down processing to the video signal in synchronization with the first timing signal, stores the video signal in a first memory (4), reads out the video signal from the first memory on the basis of the second timing signal, and outputs it to a plasma display module. Thereby, the video signal presented on the plasma display module (6) is to hold the refresh rate of the original picture image of the film source, thus displaying a smooth picture image without unnaturalness.

## Description

### BACKGROUND OF THE INVENTION

### Technical Field of the Invention

The present invention relates to a telecine display device and a telecine display method that convert a picture image of a movie source and the like, recorded by 24 frames per second, into an NTSC signal of 60 fields per second by the 2-3 pull-down processing with the telecine system, and display the converted video signal on a plasma display device or the like.

### Description of the Related Art

In the film source such as a movie, the picture image is recorded at a rate of 24 frames per second, and in the video signal on the other hand, the picture image is recorded by the NTSC system of 60 fields per second. Accordingly, the film source is converted into the NTSC video signal by means of the television cinema (hereunder, briefly mentioned as telecine) conversion of the 2-3 pull-down processing, which is recorded on a DVD (digital video disk) or the like, and then reproduced in a general home by the DVD device, which is displayed on a plasma display (PDP) or the like.

In the present television system (NTSC system), one frame is divided into two fields in transmitting a picture image by means of the interlaced scanning method, and the number of picture images is 30 frames (60 fields) per second. On the other hand, in the 16 mm or 35 mm movie film, the number of picture images is 24 frames per second. As a system to form the telecine video signal from this movie film, the 2-3 pull-down system is used conventionally.

In the 2-3 pull-down system, the nth frame of a film is discomposed into three fields (3/60 second, but the first and third fields are the same), and the (n+1)th frame is discomposed into two fields (2/60 second). Therefore, the nth frame is transmitted every 3/60 second, and the (n+1)th frame is transmitted every 2/60 second. Thus, the two frames of a film correspond to five fields of a video signal. Therefore, the telecine video signal formed by the 2-3 pull-down system is such that a video signal of three fields formed from the same frame and a video signal of two fields formed from the same frame are repeated alternately.

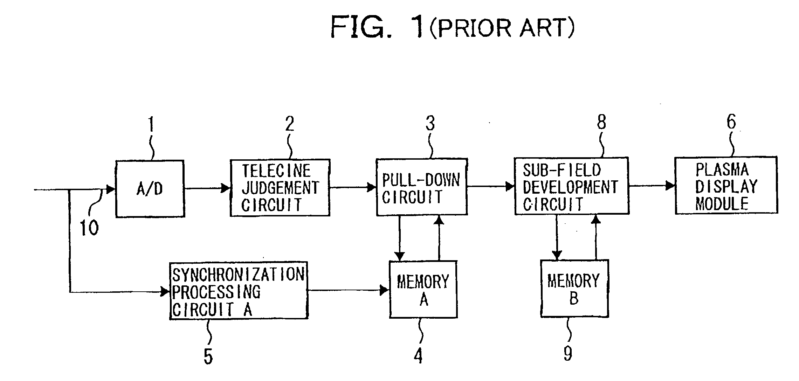

Fig. 1 is a block diagram illustrating a conventional PDP display device. An input terminal 10 of an A/D converter 1 receives an original video signal that a picture signal of a film source is converted into an NTSC signal by means of the telecine conversion system. The original video signal is converted into a digital video signal by the A/D converter 1. This digital video signal is judged whether it is a telecine signal or not in a telecine judgment circuit 2. As a result, if it is judged as the telecine signal, the refresh rate of the original picture image before conversion is calculated in the telecine judgment circuit 2. A pull-down circuit 3 executes the 2-3 pull-down processing to the signal judged as the telecine signal. This video signal is inputted to a first memory 4 to be temporally stored, and is inputted to a sub-field development circuit 8 as well. The first memory 4 is used for the pull-down processing, to follow the pull-down circuit 3.

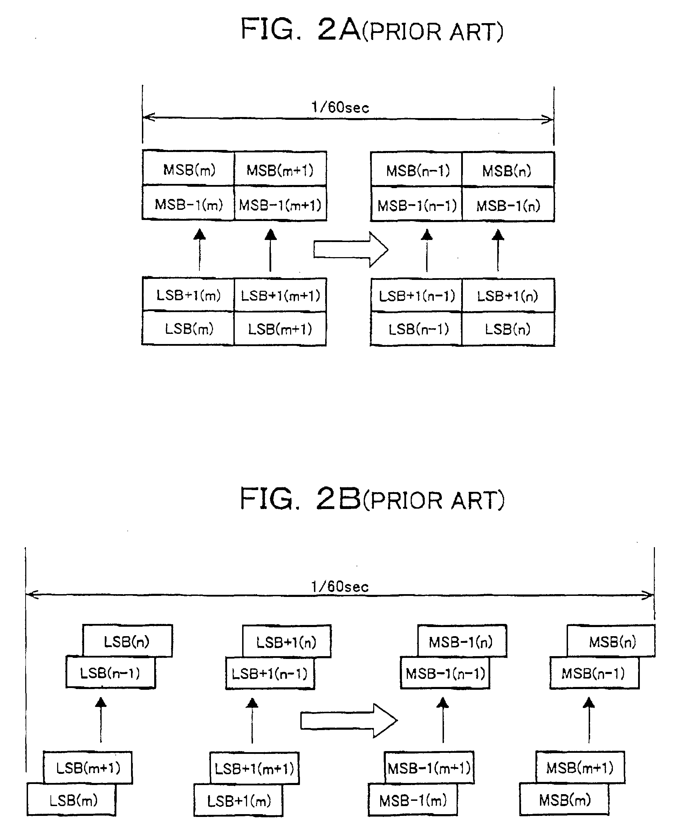

To the signal processed by the pull-down circuit 3, the sub-field development circuit 8 executes a sub-field development required for displaying the video signal on a plasma display module 6. A second memory 9 is used for the sub-field development. Figs. 2A and 2B show a method of sub-field development. Fig. 2A is an example of input signal to the sub-field development circuit 8 and Fig. 2B is an example of output signal from the sub-field development circuit 8. MSB denotes a most significant bit and LSB denotes a least significant bit.

Further, a synchronous processing circuit 5 generates synchronizing signals for determining various timings on the basis of synchronizations of the original video signal inputted thereto.

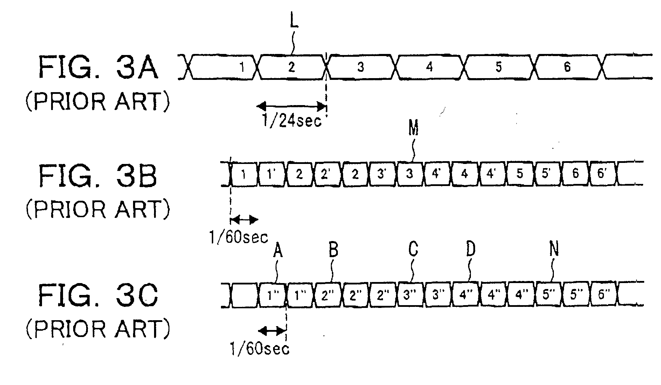

The telecine conversion in this circuit is carried out in such a manner as shown in Fig. 3A through Fig. 3C. A signal L shown in Fig. 3A represents a film source being the original picture signal. In case of a normal movie film, one frame is transmitted every 1/24 second.

A signal M shown in Fig. 3B represents a signal that the picture image of this film source is converted into an NTSC signal. The NTSC system allocates 1/60 second to one field of the NTSC signal. The NTSC system takes on an interlaced (interlaced scanning) signal, which is needed to be decomposed into the even fields and the odd fields. In the signal M shown in Fig. 3B, fields 1, 2, 3 ... are the even fields, and fields 1', 2', 3' ... are the odd fields.

When the NTSC signal recorded by this system is reproduced, generally the so-called 2-3 pull-down conversion system is used. In practice, the 2-3 pull-down conversion system and the IP (interlaced progressive) conversion system are frequently used in combination. A signal N shown in Fig. 3C represents the rearrangement of the NTSC signal by means of the above two conversion systems.

The Japanese Unexamined Patent Publication No. 2000-384357 discloses a method of attaining a non-interlaced NTSC signal by means of the 2-3 pull-down conversion system and the IP conversion system in combination. Fig. 4A illustrates the telecine signal conversion system disclosed in this publication. As shown in Fig. 4A, from a picture screen of a film composed of continuing frames A, B, C, D ..., the 2-3 pull-down processing generates the interlaced telecine signal. One field of the interlaced telecine signal is timed for 1/60 second, and a picture image for two frames is converted into a picture image for five fields. For example, a picture image information A in the first frame is converted into an odd scanning signal A1 of the picture image information A in the first field I1 and an even scanning signal A2 of the picture image information A in the second field I2. Successively, a picture image information B in the second frame is converted into an odd scanning signal B1 of the picture image information B in the third field I3, an even scanning signal B2 of the picture image information B in the fourth field I4, and the odd scanning signal B1 of the picture image information B in the fifth field I5 of the interlaced system.

In this manner, the interlaced telecine signal generated is converted sequentially into a serial scanning telecine signal for continuous five fields as one sequence. For example, the odd scanning signal A1 in the first field I1 and the even scanning signal A2 in the second field I2 are synthesized to generate a scanning signal A in the first frame P1 of the serial scanning telecine signal. And, this scanning signal is also used as the scanning signal in the second frame P2.

Also, the odd scanning signal B1 in the third field I3 and the even scanning signal B2 in the fourth field I4 are synthesized to generate a scanning signal B in the third frame P3 of the serial scanning telecine signal. And, this scanning signal is used as the scanning signal in the fourth frame P4 and the scanning signal in the fifth frame P5.

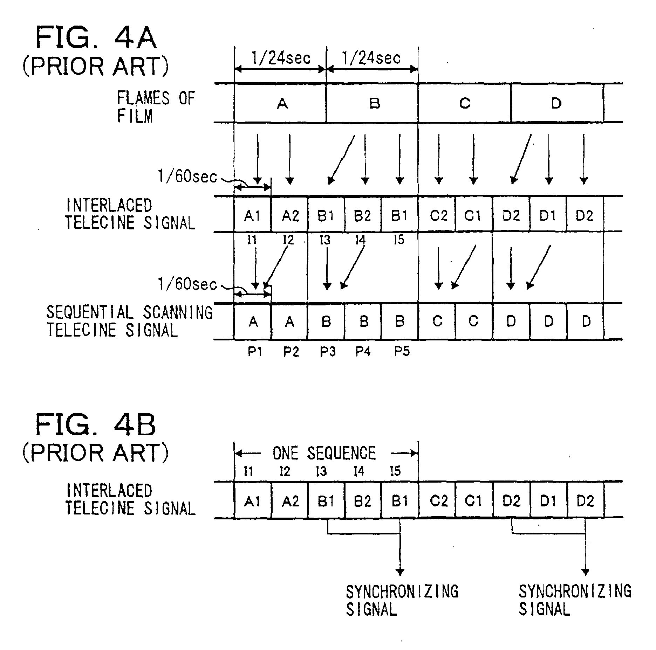

Now, in order to carry out these processes, it is necessary to know the sequence for the five fields, namely, the pull-down phase. As a method of recognizing the pull-down phase, the method illustrated in Fig. 4B is known. This method calculates a difference between a signal in the present field and a signal in the previous field by two fields, and if the difference is smaller than a threshold, for example, is zero, it will detect the pull-down phase with a pulse (synchronizing signal) generated. This is because the difference between a signal in the third field and a signal in the fifth field becomes nearly zero, since the picture image information in the third field and the fifth field are identical in one sequence for five fields of the 2-3 pull-down system. Thus, the method attains the signal having the 2-3 pull-down conversion and the IP conversion processed.

A signal N shown in Fig. 3C is a signal having the IP conversion and the 2-3 pull-down conversion applied to the signal M shown in Fig. 3B. In the signal N shown in Fig. 3C, the field 1" of the signal A is the synthesized of the field 1 and the field 1' of the signal M shown in Fig. 3B, the field 2" of the signal B is the synthesized of the field 2 and the field 2' of the signal M, and the field 3" of the signal C is the synthesized of the field 3 and the field 3' of the signal M, and the other signals are the same. However, in the NTSC signal, the one frame of a film source forms the two fields, the field 1 and the field 1', and the next one frame forms the three fields, the field 2 and the field 2' and the field 2, as described above; therefore, in the signal B, the filed 2" with the field 2 and the field 2' synthesized is repeated for three fields. This processing is carried out by means of the first memory 4.

In the signal thus formed, the field 1" of the signal A shown in Fig. 3C and the field 1 of the signal L shown in Fig. 3A become the same picture image, and the field 2" of the signal B shown in Fig. 3C and the field 2 of the signal L shown in Fig. 3A become the same picture image, whereby a good quality of picture images can be achieved not to deteriorate the characteristics of the original picture image.

However, in attention to an object that moves with a constant spacing, for example, from the first to the fifth frames of the signal L shown in Fig. 3A, in such a manner that the interval being the field 1" in the signal N show in Fig. 3C takes two frames, and the interval being the field 2" takes three frames, the breadths of the two intervals are different. Therefore, it will create such unnatural picture images that the display time for each frame is different.

That is, in the conventional pull-down processing, in a scene with a constant movement in succession, for example, in a scene with the whole picture panned horizontally, moves and stops are finely repeated with different display times. As the result, the picture involves unnaturalness and loses smoothness, which is disadvantageous.

Except for such a conventional technique, as a document related to the telecine signal, the Japanese Unexamined Patent Publication No. Hei 5-183807 discloses a video signal circuit that efficiently transmits the telecine video signal formed by the 2-3 pull-down system. This prior document discloses a technique relating to the transmission of an already converted signal.

The Japanese Unexamined Patent Publication No. Hei 7-99603 discloses a technique that converts a film source of 24 Hz by means of the 2-3 pull-down system into a video signal being the field unit of 60 Hz, a method and a device that code the video signal, a method and a device that decode the video signal, and a recording media that records the video signal. This prior document also discloses a technique that codes and decodes the video signal on the presumption of an already converted signal, or a recording media of the signal, which is not related to the conversion system.

The Japanese Unexamined Patent Publication No. Hei 7-298212 enables discrimination of a redundant field created in a signal converted by the 2-3 pull-down system, and discloses a device provided with an image rate converter for eliminating this redundant field. This device adds a flag indicating the top of the sequence in the 2-3 pull-down conversion to the television signal, or outputs it independently to facilitate discrimination of a redundant field. This type of discrimination of a redundant field enables a high-efficiency coding by the algorithm of MPEG, for example.

Further, the Japanese Patent Publication No. 2906332 discloses a technique that converts a telecine signal of the interlaced system being the standard of the telecast into a telecine signal of the serial scanning system. To attain a serial scanning telecine signal needs a serial scanning camera, which is expensive. Accordingly, this publication discloses a method and a device that convert an interlaced telecine signal into a serial scanning telecine signal without using a camera by the serial scanning system.

In this manner, these prior documents are related to the telecine signal, however each of them is different from the present invention in terms of the purpose and construction.

### SUMMARY OF THE INVENTION

An object of the invention is to provide a telecine display device and a telecine display method that, in the reproduction of a video signal having a telecine conversion applied from a film source into an NTSC signal or the like by means of the 2-3 pull-down system, make the refresh rate of a signal outputted on a display device such as a plasma display module into correspondence with the refresh rate of the original picture image of the film source, and display a smooth picture image without unnaturalness.

According to one aspect of the invention, the telecine display device includes: an input terminal to which is inputted a video signal having a telecine conversion applied from an original picture image of a film source, an A/D converter that converts the video signal into a digital video signal, a telecine judgment circuit that judges whether the digital video signal outputted from the A/D converter is a telecine signal or not, and if it is the telecine signal, calculates a refresh rate of the original picture image of the film source, a first synchronization processing circuit that outputs timing signals on the basis of the refresh rate of the video signal, a second synchronization processing circuit that outputs timing signals on the basis of the refresh rate of the original picture image of the film source that the telecine judgment circuit calculated, and a pull-down circuit that executes a 2-3 pull-down processing to the video signal in synchronization with the timing signals from the first synchronization processing circuit, stores the result in a first memory, and reads to output the video signal from the first memory in synchronization with the timing signals from the second synchronization processing circuit.

In the telecine display device, the video signal is outputted at the refresh rate of the original picture image of the film source, or the video signal is outputted at an integer-fold refresh rate to the refresh rate of the original picture image of the film source.

Further, the telecine display device may include a sub-field development circuit that develops the video signal outputted from the pull-down circuit into video signals by sub-fields each for gradation display, and outputs to display obtained signals to a plasma display module.

Further, the sub-field development circuit has the refresh rate thereof set to an integer-fold to the refresh rate of the original picture image of the film source, and thereby displays integer times the signal of the same frame with the video signal outputted from the pull-down circuit, on the plasma display module.

The pull-down circuit executes the 2-3 pull-down processing and a progressive conversion processing to the video signal from the telecine judgment circuit, and stores obtained signals in the first memory.

According to another aspect of the invention, the telecine display method includes the steps of: applying a pull-down processing to a video signal having a telecine conversion applied from an original picture image of a film source by a first timing signal based on a refresh rate of the video signal, and outputting to a display module the video signal having the pull-down processing applied by a second timing signal based on the refresh rate of the original picture image of the film source.

According to another aspect of the invention, the telecine display method includes the steps of: calculating a first timing signal based on a refresh rate of a video signal having a telecine conversion applied from an original picture image of a film source, and a second timing signal based on the refresh rate of the original picture image of the film source, applying a 2-3 pull-down processing to the video signal in synchronization with the first timing signal, and storing the video signal in a first memory, reading out the video signal from the first memory on the basis of the second timing signal, and outputting it to a display module.

The video signal read from the first memory on the basis of the second timing signal is developed into sub-fields for gradation display in the sub-field development circuit, and thereafter is outputted to a plasma display module as a display module.

In this invention, the telecine display method calculates a first timing signal based on the refresh rate of a video signal having a telecine conversion applied from an original picture image of a film source, and a second timing signal based on the refresh rate of the original picture image of the film source. And, the method applies the 2-3 pull-down processing to the video signal in synchronization with the first timing signal, stores the video signal in the first memory, reads out the video signal from the first memory on the basis of the second timing signal, and outputs it to a plasma display module. Thereby, the video signal presented on the plasma display module is to hold the refresh rate of the original picture image of the film source, thus displaying a smooth picture image without unnaturalness.

Thus, according to the invention, even in the reproduction of the video signal in which the original picture image of a film source is converted into an NTSC signal by means of the 2-3 pull-down system, it becomes possible to display the picture image having the same refresh rate with that of the original picture image, so that the telecine display device is able to provide a smooth picture image with unnaturalness eliminated during reproduction of animations.

### BRIEF DESCRIPTION OF THE DRAWINGS

Fig. 1 is a block diagram illustrating a conventional telecine display device of the plasma display;
Fig. 2A and 2B show a method of sub-field developing;
Fig. 3A through Fig. 3C are a timing chart of the signals illustrating the operation of the conventional telecine display device, respectively;
Fig. 4A and Fig. 4B are a chart illustrating a method that converts an interlaced telecine signal having the telecine conversion applied into a non-interlaced signal by means of the progressive conversion, respectively;
Fig. 5 is a block diagram illustrating a telecine display device of the plasma display device according to the embodiment of the present invention; and
Fig. 6A through Fig. 6E are a timing chart of the signals illustrating the operation of the telecine display device relating to the embodiment, respectively.

### DETAILED DESCRIPTION OF THE PREFERRED EMBODIMENTS

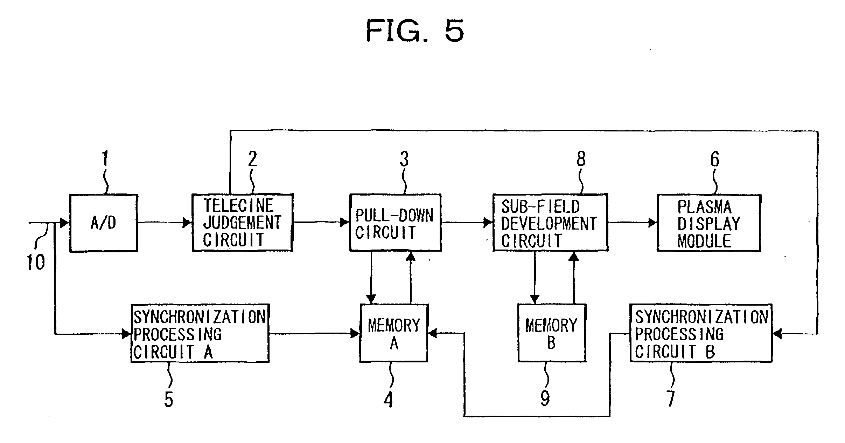

The preferred embodiment of the invention will now be described with reference to the accompanying drawings. Fig. 5 is a block diagram illustrating a telecine display device of the plasma display device relating to the embodiment of the invention. The telecine display device includes an A/D converter 1 that converts an original video signal from a film source into a digital video signal, a telecine judgment circuit 2, a pull-down circuit 3 that executes the 2-3 pull-down processing, a first memory 4, a sub-field development circuit 8 that executes the sub-field development, a second memory 9, a plasma display module 6, a first synchronization processing circuit 5 that generates timing signals on the basis of the synchronization of the original video signal, and a second synchronization processing circuit 7 that generates various timing signals on the basis of the synchronization of signals having the telecine conversion applied.

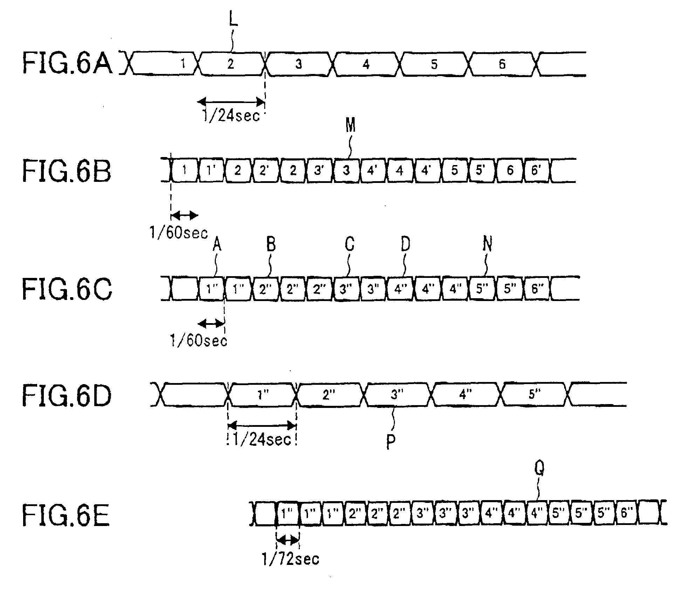

As shown in Fig. 6A, a picture signal L of a film source of which one frame is timed for 1/24 second is converted into an NTSC signal of which one field is timed for 1/60 second, as shown in Fig. 6B by means of the telecine conversion, which is recorded on a DVD or the like. This NTSC signal L is reproduced by a DVD device or the like, which is inputted to an input terminal 10 of the plasma display device. The original video signal inputted to the input terminal 10 is converted into a digital video signal by the A/D converter 1.

This digitally converted video signal is inputted to the telecine judgment circuit 2, which judges whether or not the digitally converted video signal is a telecine signal, and calculates the refresh rate of the original picture image before the telecine conversion. With regard to the judgment as to whether it is the telecine signal or not, when the number of the fields constituting one frame is a sequence of two, three, two, three, in such a manner that one frame is composed of field 1 and field 1', and the next frame is composed of field 2 and field 2' and field 2, as shown in Fig. 6B, the signal inputted to the input terminal 10 is judged as the telecine signal that a picture signal of a film source is converted into an NTSC signal. Further, when the video signal inputted to the input terminal 10 is a telecine signal, the telecine judgment circuit 2 calculates the refresh rate of the original picture image before the telecine conversion. When the original picture image is a film source, the telecine judgment circuit 2 calculates the refresh rate of the original picture image as 24 Hz.

The pull-down circuit 3 applies the 2-3 pull-down processing and the IP conversion processing to a signal judged as a telecine signal. The sub-field development circuit 8 executes a sub-field development required for displaying the picture image on the plasma display module 6, on the basis of a signal inputted from the pull-down circuit 3.

The first synchronization processing circuit 5 generates various timing signals on the basis of the synchronization of a video signal inputted to the input terminal 10, that is, 1/60 second. And, the second synchronization processing circuit 7 generates various timing signals on the basis of the synchronization of the original signal to the NTSC signal having the telecine conversion applied. It is possible to set the refresh rate of the second synchronization processing circuit 7 to an integer-fold of the refresh rate of the original picture image corresponding to the signal L in Fig. 3A. The first memory 4 operates at the timing of the first synchronization processing circuit 5, when used in the pull-down, and it operates at the timing of the second synchronization processing circuit 7, when outputting to the plasma display module 6. The second memory 9 is a memory necessary for the sub-field development.

Now, the operation of the invention will be described with reference to the block diagram in Fig. 5 and the signal diagrams in Fig. 6A through Fig. 6E. The signal L in Fig. 6A represents an original picture signal (1/24 second) of a film source. The signal M in Fig. 6B is a signal in which the original picture signal of this film source is converted into an NTSC signal. The video signal having the NTSC conversion applied is inputted to the input terminal 10 through a DVD or the like.

The video signal inputted from the input terminal 10 is converted into a digital signal in the A/D converter 1. The signal configuration here corresponds to the signal M shown in Fig. 6B. That is, the frame 1 of the film source is converted into the field 1 and the field 1', and the frame 2 of the film source is converted into the field 2 and field 2' and the field 2. In this manner, the two frames of the film source are converted into the five fields of the NTSC signal. Therefore, the digital video signal converted in the A/D converter 1 is a signal in which the two fields from one frame and the three fields from the next one frame are alternately repeated in sequence.

The video signal converted into the digital signal is inputted to the telecine judgment circuit 2, where the judgment is made as to whether it is a telecine signal or not. When the video signal is judged as a telecine signal, the refresh rate of the original video signal before the telecine conversion is calculated. The judgment as to whether it is a telecine signal or not is made by detecting that the signals constituting one frame continue in a sequence of two fields, three fields, two fields, ..., so that this is confirmed the telecine signal converted from the picture image of the film source.

And, the 2-3 pull-down processing and the IP conversion processing are carried out in the pull-down circuit 3. That is, the pull-down circuit 3 synthesizes the field 1 and the field 1' of the signal M shown in Fig. 6B to form a signal A (filed 1") that is converted into the progressive signal. Also, the pull-down circuit 3 synthesizes the field 2 and the field 2' of the signal M shown in Fig. 6B to form a signal B (filed 2") that is converted into the progressive signal. Thus, in the pull-down circuit 3, each field (60 Hz) of the NTSC signal M in Fig. 6B is converted into the non-interlaced signal, and the signals attained by the IP conversion processing are inputted to the memory 4. Therefore, the state of the video signal inputted to the memory 4 corresponds to the signal N shown in Fig. 6C. Here as an example, the aforementioned Japanese Patent Publication No. 2906332 describes the telecine signal conversion method that converts the interlaced telecine signal generated by the 2-3 pull-down processing into the serial scanning telecine signal.

The 2-3 pull-down processing and the IP conversion processing by this pull-down circuit 3 operate on the basis of the various timing signals (basically, 60 Hz) that the first synchronization processing circuit 5 generates.

On the other hand, based on the refresh rate of the original picture image calculated by the telecine judgment circuit 2, the second synchronization processing circuit 7 generates the timing signals to read out the memory 4, etc. Therefore, as in this embodiment, when the refresh rate of the original picture image of a film source is 1/24 (second), the various types of timing signals generated from the second synchronization processing circuit 7 assume basically 24 Hz, and the refresh rate of the image outputted from the memory 4 is 1/24 (second).

Here, it is made possible to set the refresh rate of the second synchronization processing circuit 7 to an integer-fold of the refresh rate of the original image corresponding to the signal L in Fig. 6A.

The output signal read from the memory 4 is inputted to the sub-field development circuit 8. As mentioned above, the refresh rate of the video signal here is 1/24 (second). The video signal here is formed as the signal P shown in Fig. 6D. In other words, the signal N in Fig. 6C appears in a sequence of the field 1" for 2/60 second, the field 2" for 3/60 second, the field 3" for 2/60 second, the field 4" for 3/60 second, ...; however, from the memory 4 appears the signal P in succession of the field 1", 2", 3", 4", ... whose one frame is timed for 1/24 second. This video signal P assumes the same refresh rate as the original video signal shown in Fig. 6A.

This video signal P is inputted to the memory 9 for the sub-field development, which is developed into a video signal for each sub-field that is suited for input to the plasma display module 6. The sub-field development circuit 8 creates a signal that indicates the gradation of 8 bits, 256 gradations.

This signal is inputted to the plasma display module 6 for display, and as shown in Fig. 6D, since the video signal P is the signal having the same length of time as the original video signal L, the reproduced picture does not accompany unnaturalness, and presents smoothness.

Further, in this embodiment, the refresh rate of the sub-field development circuit 8 generated from the second synchronization processing circuit 7 is set to, for example, threefold of the refresh rate in the original picture image, that is, 1/72 (second) here. As the result of this processing, the output of the memory 9 has the threefold refresh rate to the original video signal L, as a signal Q shown in Fig. 6E, and attains the signal of which three frames correspond to one frame of the original picture image. Receiving the signal Q thus obtained, the plasma display module 6 presents a smooth picture with extremely rare flickers and still more limited unnaturalness.

According to this invention, although the telecine conversion of a film source is executed by means of the 2-3 pull-down system, it becomes possible to display the picture image on the basis of the signal P or the signal Q shown in Fig. 6D or Fig. 6E; therefore, it is possible to display a smooth picture without unnaturalness during reproduction of animations.

And, it is natural that the invention can be applied not only to a plasma display device, but also to other picture display devices.

## Claims

1. A telecine display device comprising:
an input terminal (10) to which is inputted a video signal having a telecine conversion applied from an original picture image of a film source,
an A/D converter (1) that converts the video signal into a digital video signal,
a telecine judgment circuit (2) that judges whether the digital video signal outputted from the A/D converter is a telecine signal or not, and if it is the telecine signal, calculates a refresh rate of the original picture image of the film source, and
a first synchronization processing circuit (5) that outputs timing signals on the basis of the refresh rate of the video signal,
**characterized by** further comprising,
a second synchronization processing circuit (7) that outputs timing signals on the basis of the refresh rate of the original picture image of the film source that the telecine judgment circuit calculated, and
a pull-down circuit (3) that executes a 2-3 pull-down processing to the video signal in synchronization with the timing signals from the first synchronization processing circuit, stores the result in a first memory (4), and reads to output the video signal from the first memory in synchronization with the timing signals from the second synchronization processing circuit.

2. A telecine display device as claimed in claim 1, **characterized in that** the video signal is outputted at the refresh rate of the original picture image of the film source.

3. A telecine display device as claimed in claim 1, **characterized in that** the video signal is outputted at an integer-fold refresh rate to the refresh rate of the original picture image of the film source.

4. A telecine display device as claimed in claim 1, further comprising a sub-field development circuit (8) that develops the video signal outputted from the pull-down circuit into video signals by sub-fields each for gradation display, and outputs to display obtained signals to a plasma display module (6).

5. A telecine display device as claimed in claim 4, **characterized in that** the sub-field development circuit (8) has the refresh rate thereof set to an integer-fold to the refresh rate of the original picture image of the film source, and thereby displays integer times the signal of the same frame with the video signal outputted from the pull-down circuit, on the plasma display module.

6. A telecine display device as claimed in claim 1, **characterized in that** the pull-down circuit (3) executes the 2-3 pull-down processing and a progressive conversion processing to the video signal from the telecine judgment circuit, and stores obtained signals in the first memory.

7. A telecine display method **characterized by** comprising the steps of:
applying a pull-down processing to a video signal having a telecine conversion applied from an original picture image of a film source by a first timing signal based on a refresh rate of the video signal, and
outputting to a display module (6) the video signal having the pull-down processing applied by a second timing signal based on the refresh rate of the original picture image of the film source.

8. A telecine display method **characterized by** comprising the steps of:
calculating a first timing signal based on a refresh rate of a video signal having a telecine conversion applied from an original picture image of a film source, and a second timing signal based on the refresh rate of the original picture image of the film source,
applying a 2-3 pull-down processing to the video signal in synchronization with the first timing signal, and
storing the video signal in a first memory (4), reading out the video signal from the first memory on the basis of the second timing signal, and outputting it to a display module (6).

9. A telecine display method as claimed in claim 8, **characterized in that** the video signal read from the first memory (4) on the basis of the second timing signal is developed into sub-fields for gradation display in the sub-field development circuit (8), and thereafter is outputted to a plasma display module (6) as a display module.
